# EUROPEAN PATENT APPLICATION

(11) **EP 3 557 221 A1**
(43) Date of publication of application: **23.10.2019**
(21) Application number: 19169850.5
(22) Date of filing: 17.04.2019
(51) Int. Cl.: G01N 11/04, G01N 11/08, B33Y 50/02

(54) **METHOD AND SYSTEM FOR MEASURING THE QUALITY OF MATERIAL EXTRUSION BY PRINT HEAD OF A 3D PRINTER**

(30) Priority: 17.04.2018 PL 42525918
(71) Applicant: 3D Gence Spólka Z Ograniczona Odpowiedzialnoscia, 40-085 Katowice (PL)
(72) Inventor: Kostrzewa, Szymon, 05-622 Belsk Duzy (PL); Wróbel, Mateusz, 43-346 Bielsko-Biala (PL); Nowoczek, Kamil, 43-424 Drogomysl (PL); Wilk, Krzysztof, 41-400 Myslowice (PL); Kukula, Andrzej, PL/ 44-167 Rzeczyce (PL)
(74) Representative: AOMB Polska Sp. z.o.o.

(57) **Abstract**

The invention relates to a method for measuring the quality of material extrusion by a print head of a 3D printer, characterised in that the resistance to extrusion of the printing material (1) through a nozzle (6) of the print head (5) is tested at a preset time with variable feed of the printing material, and then the obtained values are compared with the reference values.

The invention relates also to a system for implementation of the method.

## Description

The invention relates to a method for measuring the quality of the material extrusion by print head of a 3D printer in the fused filament fabrication technology and a system for implementation thereof.

A three-axis motion print head of a 3D printer heats the material and deposits it layer-by-layer to create a printed model in the extrusion process. The print head structure, the accuracy of its fabrication and fitting of its components affect the quality parameters of the extrusion process. The quality of the process depends on the print head nozzle and is determined mainly by the homogeneity and uniformity of the material flow as well as the resistance to extrusion.

In a known method, the expected quality of extrusion of the print head is determined by assessing the accuracy of fabrication of its individual components before assembly. Due to the inability to evaluate the fitting of the components, test printouts by the print head are made and the quality of the paths of the printed model is visually assessed. A disadvantage of the known method is that it is highly time-consuming and low-accurate.

The purpose of the invention is to determine the quality of the material extrusion by a print head under conditions close to normal operation and to assess the suitability of a particular print head or print head type for intended use.

In the method according to the invention, the printing material resistance to extrusion through the head nozzle is tested for a preset time, while the material feed is varied by adjusting the rotational speed of a stepper motor. Then, the obtained dependence of the pressing force as a function of time is compared with the reference relationship and the acceptability of deviations from the reference is evaluated.

The method and a system for implementation thereof are presented in claims.

Preferably, the resistance to extrusion is tested using a force sensor.

Preferably, as a force sensor a deformation sensor is used in the form of a strain gauge bridge or a piezoelectric sensor which is placed on the measuring beam. At least one measuring beam connects the print head holder to the printer body. A knurled bolt (nut, roller) of the printing material actuator is forced to move in time in a known manner, and the extrusion force value is read out using a force sensor - a strain gauge bridge or a piezoelectric sensor. The arrangement of the measuring beam with the sensor and the print head holder allows in particular measurement of the deformation resulting from the pressure of the thermoplastic material on the print head nozzle, and thereby the measurement of the force.

Preferably, the resistance to extrusion is determined by measuring the torque on the actuator of the printing material.

Preferably, the resistance to extrusion is tested in cycles with time intervals from 5 to 50 milliseconds.

In an exemplary system for implementation of the method according to the invention, the print head holder is connected to the printer body by means of measuring beams only, i.e. at least by one measuring beam equipped with a deformation sensor connected to a meter. Preferably, the force (deformation) sensor is a strain gauge bridge or a piezoelectric sensor.

The force readings plotted in the graph, whose shape is compared with the ideal theoretical trace, allow the quality of extrusion to be assessed without the need for testing otherwise and performing a test print.

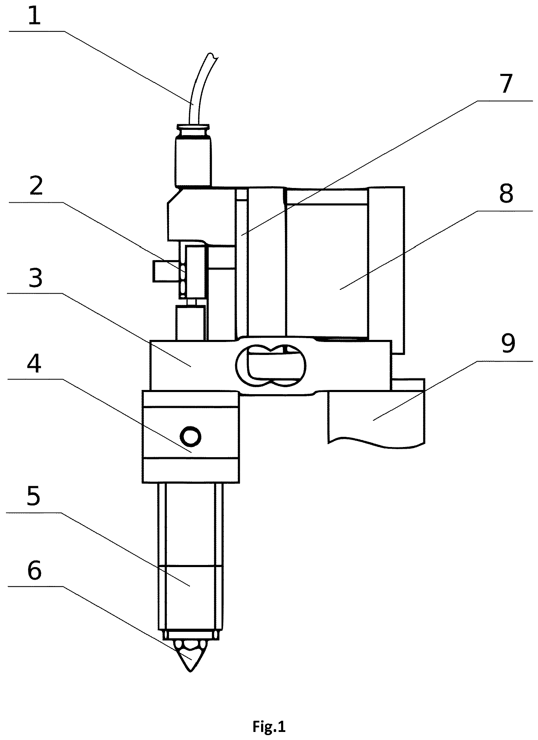

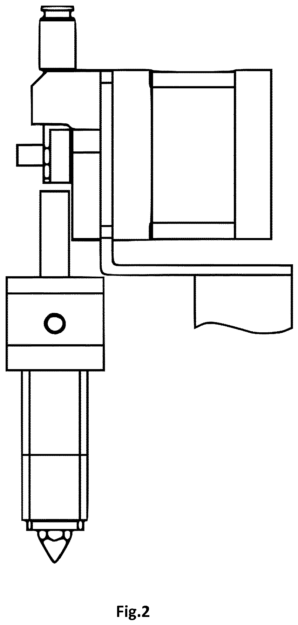

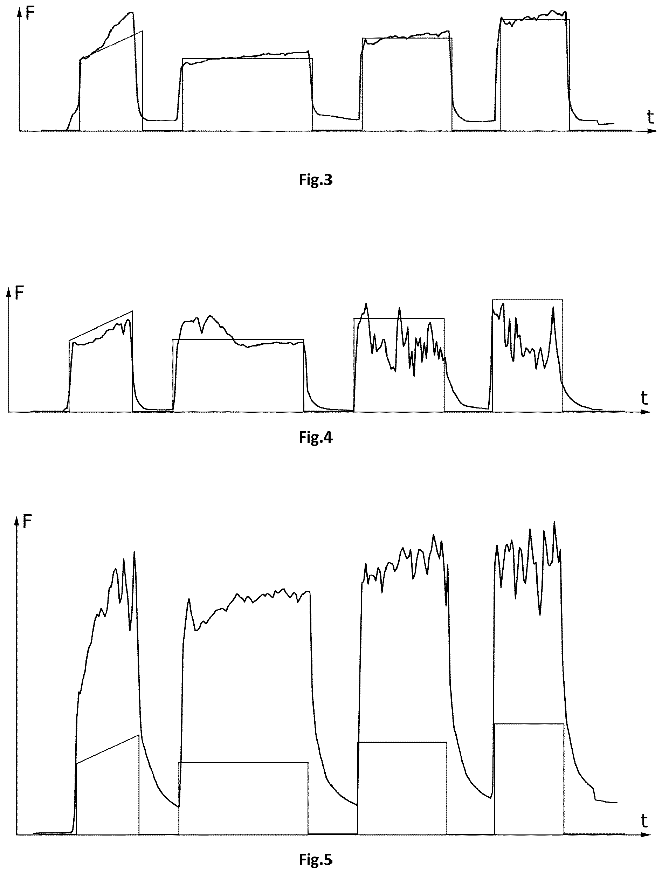

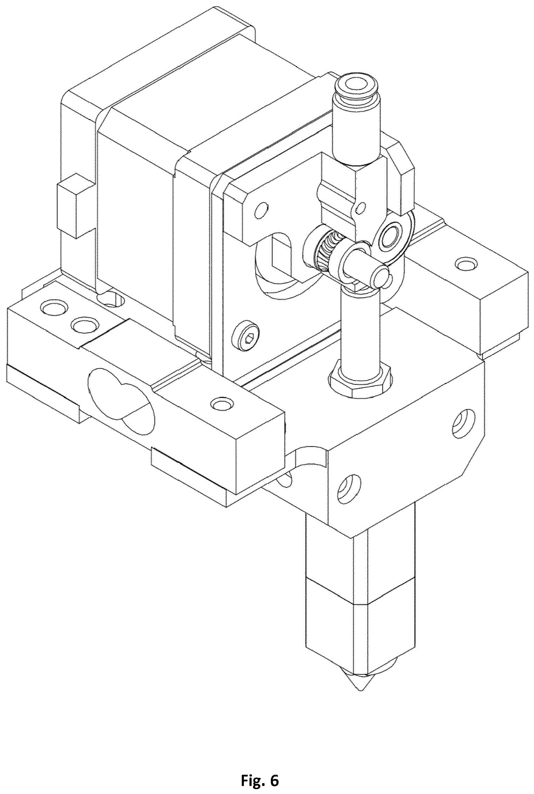

An exemplary system for implementation of the method according to the invention is shown in the drawing, wherein Fig. 1 shows the system in operation in a side view, Fig. 2 shows the system in a front view, Figure 6 shows the system in an oblique view, and Fig. 3, Fig. 4 and Fig. 5 show plotted readings of force sensor in arbitrary units as a function of time compared with the theoretical ideal dependence of the force on time.

The tested print head 5 with a nozzle 6 is mounted in a holder 4, and the holder 4 is connected to the printer body 9 exclusively by measuring beams 3 equipped with force sensors, for example strain gauge bridges 10. The actuator 7 of the material 1 is attached to the printer body 9. The actuator 7 includes a stepper motor 8 and a knurled nut 2 with clamp. The tested print head is connected to the material feeder only indirectly, in particular through the printing material 1.

In the course of measurement, using a guide system (the knurled nut) 2 driven by a motor 8, the material 1 is extruded through the print head 5 with the nozzle 6, heated to temperature preferably close to the temperature of the 3D printing process. The measurement of the resistance to extrusion with a force sensor, preferably every 5 to 50 milliseconds, is coupled to this movement. The movement is programmed in such a way as to know the theoretical ideal course of the plotted readings from the force sensors.

The method according to the invention uses the measuring system so as to obtain the extrusion force readings on the strain gauge by forcing a movement of the extruder knurled screw on the printing material with the known course in time. The readings can be plotted in a graph whose shape is compared against the theoretical ideal course so as to assess the quality of extrusion on this basis only, without the need for other tests on the printer itself, especially the analysis of quality of the printed model's printing paths.

The analysis of graphs obtained with the method according to the invention allows for obtaining information on the quality of extrusion of the material under conditions close to the normal printer operation. The graph in Fig. 3 shows the results obtained in the print head test, wherein the quality of the extrusion is acceptable. Empirical tests of the quality of running paths of the printed model have confirmed the acceptability of deviations from the ideal graph shown in Fig. 3. The graph in Fig. 4 shows the results of the print head test, wherein the quality of the extrusion is not acceptable, as confirmed by the analysis of the quality of the paths of the printed model, which had visible defects. The graph in Fig. 5 shows the results of the print head test, which is unsuitable for printing due to internal defects resulting from the improperly fabricated nozzle.

## Claims

1. A method for measuring the quality of material extrusion by a print head of a 3D printer, **characterised in that** the resistance to extrusion of the printing material (1) through a nozzle (6) of the print head (5) is tested at a preset time with variable feed of the printing material, and then the obtained values are compared with the reference values.

2. The method according to claim 1, **characterised in that** the resistance to extrusion is measured by measuring the deformation resulting from pressure of the printing material (1) on the print head nozzle (6).

3. The method according to claim 1 or 2, **characterised in that** the measurement of the resistance to extrusion is performed using a force sensor, installed on at least one measuring beam (3) connecting the holder (4) of the print head (5) to the printer body (9).

4. The method according to claim 3, **characterised in that** a strain gauge bridge is used as a force sensor.

5. The method according to claim 3, **characterised in that** a piezoelectric sensor is used as a force sensor.

6. The method according to claim 1, **characterised in that** the resistance to extrusion is determined by measuring the torque on the actuator of the printing material.

7. The method according to any preceding claim, **characterised in that** the resistance to extrusion is tested in cycles with time intervals from 5 to 50 milliseconds.

8. The method according to any preceding claim, **characterised in that** the acceptability of the deviations from the reference is assessed after the obtained dependence of the extrusion force on time has been compared with the reference dependence.

9. A system for measuring the quality of the material extrusion by print head of a 3D printer comprising a print head equipped with a nozzle, mounted in a holder (4) and a material actuator comprising a stepper motor (8) and a knurled nut (2) with clamp, **characterised in that** the only connection of the print head holder (4) with the printer body (9) constitutes at least one measuring beam (3) equipped with a force sensor.

10. The system according to claim 9, **characterised in that** the force sensor is a strain gauge bridge.

11. The system according to claim 9, **characterised in that** the force sensor is a piezoelectric sensor.

12. The system according to claim 1, 10 or 11, **characterised in that** the force sensor is connected to a meter.
